# EUROPÄISCHE PATENTANMELDUNG

(11) **EP 4 254 085 A1**
(43) Veröffentlichungstag der Anmeldung: **04.10.2023**
(21) Anmeldenummer: 22165484.1
(22) Anmeldetag: 30.03.2022
(51) Int. Cl.: G05B 17/02

(54) **VERFAHREN ZUR MODELLIERUNG EINES INDUSTRIELLEN SYSTEMS UND VORRICHTUNG ZUR STEUERUNG UND/ODER ÜBERWACHUNG EINES INDUSTRIELLEN SYSTEMS**

(71) Anmelder: Siemens Aktiengesellschaft, 80333 München (DE)
(72) Erfinder: Depeweg, Stefan, 14052 Berlin (DE); Heesche, Kai, 81539 München (DE); Kaiser, Markus, Cambridge, CB2 9NR (GB); Sterzing, Volkmar, 85579 Neubiberg (DE); Weber, Marc Christian, 80339 München (DE)
(74) Vertreter: Siemens Patent Attorneys

(57) **Zusammenfassung**

Die Erfindung betrifft eine Erstellung einer Modellierung für ein industrielles System. Hierzu wird auf eine bereits bestehende Modellierung zurückgegriffen, welche unter Verwendung weiterer Modellierungsdaten ergänzt oder modifiziert wird. Zusätzlich werden auch Unsicherheiten der so gewonnenen ergänzten bzw. modifizierten Modellierung ermittelt. Durch die Nutzung einer bereits bestehenden Modellierung, kann eine neue, ergänzte bzw. modifizierte Modellierung mittels einer geringen Menge an zusätzlichen Modellierungsdaten erstellt werden. Somit wird ein eine unsicherheitssensitive Anpassung einer bestehenden Modellierung erzielt.

## Beschreibung

### Technisches Gebiet

Die vorliegende Erfindung betrifft ein Verfahren zur Modellierung eines industriellen Systems. Die vorliegende Erfindung betrifft ferner eine Vorrichtung zur Steuerung und/oder Überwachung eines industriellen Systems.

### Hintergrund

Obwohl die vorliegende Erfindung nachfolgend in Zusammenhang mit einer Gasturbine beschrieben wird, ist die Erfindung nicht hierauf beschränkt. Vielmehr kann die vorliegende Erfindung grundsätzlich auf beliebige industrielle Systeme angewendet werden, insbesondere auf industrielle Systeme, welche mit Hilfe eines sogenannten digitalen Zwillings (digital twin) überwacht und/oder gesteuert werden.

Für eine effiziente Steuerung und Überwachung von industriellen Systemen, wie beispielsweise Gasturbinen, werden in vielen Fällen sogenannte digitale Zwillinge verwendet. Ein solcher digitaler Zwilling stellt ein Modell dar, welches das zu überwachende bzw. zu steuernde System abbildet. Hierdurch kann das Systemverhalten nachgebildet werden und die erforderlichen Betriebsparameter, wie beispielsweise die Steuervariablen o. ä. angepasst werden.

Im Falle von Gasturbinen können auf diese Weise beispielsweise Steuerungsvariablen optimiert werden. Hierdurch kann unter anderem die Effizienz gesteigert und auch die Schadstoffemissionen minimiert werden.

Für derartige Systeme kann zum Beispiel ein Modell mittels künstlicher Intelligenz auf Grundlage von zuvor bereits ermittelten Betriebsdaten trainiert werden. In diesem Fall müssen die Betriebsdaten für das Training zuvor an bestehenden Systemen ermittelt werden.

In jüngster Zeit ist eine Tendenz zu erkennen, dass beispielsweise bei Gasturbinen neben Erdgas auch zunehmend Wasserstoff Verwendung findet. Beispielsweise kann hierbei ein steigender Anteil von Wasserstoff dem Erdgas beigemischt werden. Darüber hinaus sind im Rahmen dieser Tendenz zu erneuerbaren Energien auch weitere Energieträger, wie beispielsweise Ammoniak o. ä., Gegenstand von Untersuchungen.

Der Trend hin zu neuen Energieträgern stellt dabei auch Herausforderungen an die für die Steuerung und Überwachung eingesetzten Modelle, wie beispielsweise einen digitalen Zwilling. Während für konventionelle Systeme bereits eine große Menge an Daten für das Training der Modelle zur Verfügung stehen, existiert für die modernen, neuartigen Energieträger und die hierfür infrage kommenden Systeme bisher nur eine sehr begrenzte Datenbasis.

Ausgehend hiervon ist es wünschenswert, industrielle Systeme auch bei wechselnden Betriebsbedingungen zu modellieren. Insbesondere ist es wünschenswert, auf einfache Weise auch eine Modellierung für Betriebsbedingungen zu generieren, für welche nur eine sehr limitierte Datenbasis existiert. In diesem Zusammenhang ist es ferner wünschenswert, die Verlässlichkeit von derartigen Modellierung abschätzen zu können.

### Offenbarung der Erfindung

Die vorliegende Erfindung schafft ein Verfahren zur Modifizierung eine Modellierung eines industriellen Systems sowie eine Vorrichtung zur Steuerung und/oder Überwachung eines industriellen Systems mit den Merkmalen der unabhängigen Patentansprüche. Weitere vorteilhafte Ausführungsformen sind Gegenstand der abhängigen Patentansprüche.

Gemäß einem Aspekt ist ein Verfahren zur Modifizierung eine Modellierung eines industriellen Systems vorgesehen. Das Verfahren ergänzt oder modifiziert eine bestehende Modellierung des industriellen Systems unter Verwendung von Modellierungsdaten. Hierbei ist in dem Verfahren ferner vorgesehen, eine Unsicherheit für die ergänzte oder modifizierte Modellierung unter Verwendung der Modellierungsdaten zu ermitteln.

Gemäß einem weiteren Aspekt ist eine Vorrichtung zur Steuerung und/oder Überwachung eines industriellen Systems vorgesehen. Hierbei erfolgt die Steuerung und/oder Überwachung des industriellen Systems unter Verwendung einer Modellierung des industriellen Systems. Die Vorrichtung umfasst eine Verarbeitungseinrichtung. Die Verarbeitungseinrichtung ist dazu ausgelegt, eine bestehende Modellierung unter Verwendung von Modellierungsdaten zu ergänzen oder zu modifizieren. Ferner ist die die Verarbeitungseinrichtung dazu ausgelegt, eine Unsicherheit für die ergänzte oder modifizierte Modellierung unter Verwendung der Modellierungsdaten zu ermitteln. Die Vorrichtung zur Steuerung und/oder Überwachung des industriellen Systems ist weiter dazu ausgelegt, das industrielle System unter Verwendung der ergänzten oder modifizierten Modellierung und der ermittelten Unsicherheit zu Steuern und/oder zu überwachen.

Die vorliegende Erfindung basiert auf der Erkenntnis, dass für die Steuerung und Überwachung von industriellen Systemen Ansätze mit einer Modellierung, wie beispielsweise einem digitalen Zwilling, zunehmend an Bedeutung gewinnen. Für derartige Modellierung sind jedoch in der Regel große Mengen an Daten erforderlich, um eine Modellierung zu erstellen. Beispielsweise können durch die Verwendung von Daten aus bereits existierenden Systemen maschinell lernende Systeme trainiert werden.

Für neuartige Systeme oder aber auch bestehende Systeme, welche unter neuartigen Bedingungen betrieben werden, existieren in der Regel jedoch nur begrenzte Daten, die zur Erstellung einer solchen Modellierung genutzt werden können. Daher ist es schwierig, in solchen Fällen eine geeignete Modellierung zu erstellen.

Es ist daher eine Idee der vorliegenden Erfindung, für eine Modellierung eines industriellen Systems mit einer veränderten Konfiguration und/oder veränderten Betriebsparametern auf eine bestehende Modellierung zurückzugreifen und eine solche bestehende Modellierung unter Verwendung einer relativ kleinen verfügbaren Datenbasis für die jeweilige Modifikation dieses bestehende Modell anzupassen. Neben der reinen Modifikation des bestehenden Modells auf Grundlage der verfügbaren Datenbasis wird darüber hinaus auch eine Angabe über die zu erwartenden Unsicherheiten in der so generierten Modellierung ermittelt. Auf diese Weise steht für den Betrieb des industriellen Systems mit der entsprechend angepassten Modellierung auch ein Maß für die Verlässlichkeit der generierten Modellierung zur Verfügung.

Somit können die auf Grundlage der generierten Modellierung ermittelten Daten für die Steuerung und/oder Überwachung des industriellen Systems entsprechend der ermittelten Unsicherheit für die Modellierung bewertet und genutzt werden. Da bei der Erstellung einer Modellierung auf eine bereits existierende Modellierung zurückgegriffen werden kann und diese existierende Modellierung daraufhin unter Verwendung von geeigneten Modelldaten für die Anpassung entsprechend ergänzt, erweitert, modifiziert oder in anderer Weise angepasst wird, ist eine deutlich geringere Datenbasis erforderlich, als dies bei einer vollständig neuen Erstellung einer Modellierung der Fall wäre.

Darüber hinaus ermöglicht die zusätzliche Angabe für die Unsicherheit der so ergänzten oder modifizierten Modellierung eine Bewertung der Modellierung selbst, sowie auch der durch eine solche Modellierung gewonnenen Angaben und Erkenntnisse. Insbesondere kann diese Angabe über die Unsicherheit der neugewonnenen Modellierung auch dazu genutzt werden, die Datenbasis für die Anpassung der ursprünglichen Modellierung gezielt derart zu erweitern, dass die jeweiligen Unsicherheiten minimiert werden können.

So können beispielsweise aus den ermittelten Unsicherheiten für eine Modellierung Betriebspunkte abgeleitet werden, an welchen weitere Betriebsparameter ermittelt werden sollten, um hieraus die Datenbasis für die Modifizierung bzw. Erweiterung der Modellierung zu optimieren.

So kann beispielsweise bei einer Gasturbine der Brennstoff modifiziert werden, um beispielsweise anstelle von reinem Erdgas die Gasturbine mit einem Gemisch von Erdgas und Wasserstoff zu betreiben. Hierfür können in dem System der Gasturbine zahlreiche Einstellungen vorgenommen werden. Das Systemverhalten des industriellen Systems mit der Gasturbine kann hierbei entsprechend modelliert werden. Diese Modellierung kann zum Beispiel ausgehend von einer Modellierung für den Betrieb mit reinem Erdgas angepasst werden, um entweder ein Modell zu erhalten, welches für ein spezielles Gemisch von Erdgas und Wasserstoff ausgelegt ist, oder ein Modell, welches für eine Bandbreite des Mischungsverhältnis ausgelegt ist. Auf Grundlage der in diesem Zusammenhang ermittelten Unsicherheiten für eine solche Modellierung können beispielsweise Einstellungen oder Betriebspunkte ermittelt werden, für welche die Datenbasis zur Anpassung der Modellierung erweitert werden sollte, um die jeweiligen Unsicherheiten zu minimieren.

Ferner können die ermittelten Unsicherheiten der Modellierung auch dazu genutzt werden, um die Toleranzen bzw. Ungenauigkeiten in der durch die Modellierung gewonnenen Erkenntnisse zu spezifizieren. Diese Informationen können einerseits bei der Bewertung der jeweiligen Resultate aus der Modellierung berücksichtigt werden. Andererseits können die Ungenauigkeiten auch bei der Regelung des industriellen Systems mit berücksichtigt werden, um die entsprechenden Steuergrößen zu bestimmen.

Für das Anpassen, Modifizieren oder Erweitern einer bestehenden Modellierung auf Grundlage der jeweiligen Modellierungsdaten können grundsätzlich beliebige Ansätze genutzt werden. Beispielsweise können die neu hinzugekommenen Modellierungsdaten mit den Modellierungsdaten für das bestehende Modell in geeigneter Weise kombiniert werden und hieraus eine neue Gesamtmodellierung erstellt werden. Alternativ ist es auch möglich, ein bereits erstelltes bzw. trainiertes Modell mittels der zusätzlichen Modellierungsdaten zu erweitern oder zu modifizieren. Hierzu können beispielsweise zusätzliche Trainingsläufe für die Anpassung der Modellierung durch die neu hinzugekommenen Modellierungsdaten ausgeführt werden. Darüber hinaus sind auch beliebige andere geeignete Ansätze wie beispielsweise der sogenannte "Progessive Neural Networks" Ansatz o. ä.n möglich.

Für die Ermittlung der jeweiligen Unsicherheiten sind ebenfalls beliebige geeignete Ansätze möglich. Beispielsweise können die entsprechenden Unsicherheiten direkt oder indirekt aus der Modellierung sowie gegebenenfalls der für die Modellierung herangezogenen Modellierungsdaten abgeleitet werden.

So können sich beispielsweise Unsicherheiten dadurch ergeben, dass die jeweiligen Modellierungsdaten, die für die Bildung bzw. Modifizierung oder Ergänzung der Modellierung herangezogen worden sind, von Betriebspunkten abweichen, für die aus der Modellierung eine Systemeigenschaft abgeleitet werden soll. Darüber hinaus sind auch beliebige andere geeignete statistische Analysen o. ä. möglich.

Gemäß einer Ausführungsform umfasst die Modellierung einen digitalen Zwilling des industriellen Systems. Ein solcher digitaler Zwilling oder digital twin stellt eine Modellierung des realen industriellen Systems dar. Insbesondere können aus einer solchen Modellierung Systemeigenschaften, Reaktionen und Ausgangsgrößen abgeleitet werden, die den jeweiligen Stimmeigenschaften, Reaktionen und Ausgangsgrößen des realen Systems entsprechend. Somit können zum Beispiel durch eine solche Modellierung mittels Variation der Eingangsparameter Betriebspunkte optimiert werden.

Gemäß einer Ausführungsform wird die Modellierung unter Verwendung eines Verfahrens des maschinellen Lernens (machine learning) ergänzt oder modifiziert. Beispielsweise können hier zu beliebige geeignete Ansätze von künstlicher Intelligenz oder ähnlichem genutzt werden. Insbesondere kann beispielsweise auf Grundlage der Modellierungsdaten ein neuronales Netzwerk o. ä. trainiert werden.

Gemäß einer Ausführungsform wird die bestehende Modellierung unter Verwendung der Modellierungsdaten erweitert. Mit anderen Worten, die resultierende Modellierung umfasst neben den Eigenschaften der ursprünglichen Modellierung einen erweiterten Bereich. So kann beispielsweise als Grundlage für eine Modellierung einer Gasturbine eine Modellierung mit einem Brennstoff bzw. Brennstoffgemisch herangezogen werden, und diese Modellierung unter Verwendung der weiteren Modellierungsdaten für den Betrieb eines weiteren Brennstoffes oder eines anderen Mischungsverhältnisses des Brennstoffgemisches erweitert werden.

Gemäß einer Ausführungsform wird unter Verwendung der bestehenden Modellierung und der Modellierungsdaten eine neue Modellierung des industriellen Systems erstellt. Beispielsweise kann die resultierende Modellierung für Betriebseigenschaft ausgelegt sein, welche von der Betriebseigenschaften der ursprünglichen Modellierung abweichen. So kann beispielsweise für den Betrieb einer Gasturbine die ursprüngliche Modellierung für den Betrieb mit Erdgas ausgelegt sein, während die neu generierte Modellierung für den Betrieb mit einem anderen Brennstoff, beispielsweise einem Erdgas-Wasserstoff-Gemisch ausgelegt ist.

Gemäß einer Ausführungsform umfassen die Modellierungsdaten sensorisch erfasste Betriebsdaten des industriellen Systems. So können beispielsweise in dem industriellen System verschiedene Betriebszustände eingestellt werden oder verschiedene Betriebspunkte angefahren werden, und hierbei können Betriebsparameter sensorisch erfasst werden. Die hierbei gewonnenen Daten können daraufhin als Basis für die Modellierungsdaten zur Erstellung, Anpassung und Erweiterung der Modellierung für das industrielle System genutzt werden.

Gemäß einer Ausführungsform umfasst das Verfahren einen Schritt zum Analysieren der ermittelten Unsicherheit und zum Ermitteln von mindestens einer Einstellung des industriellen Systems, bei welcher Betriebsdaten erfasst werden können, die dazu geeignet sind eine Modellierung des industriellen Systems mit einer reduzierten Unsicherheit zu bestimmen. Diese Weise können Einstellungen in dem industriellen System ermittelt bzw. vorgegeben werden, welche dazu geeignet sind, Modellierungsdaten für eine Optimierung der Modellierung des industriellen Systems zu erhalten. Hierzu können beispielsweise Einstellungen des industriellen Systems ermittelt werden, sodass bei dem entsprechenden Betrieb des Systems Betriebsparameter beispielsweise sensorisch ermittelt werden können, die zur Optimierung der Modellierung und insbesondere zur Verringerung der Unsicherheiten beitragen können.

Gemäß einer Ausführungsform umfasst das industrielle System eine Gasturbine. Hierbei kann beispielsweise durch die Modellierung das Betriebsverhalten einer solchen Gasturbine beschrieben werden. Zum Beispiel können dadurch Einflüsse von Steuer- oder Regelgrößen auf die Schadstoffemissionen mittels einer solchen Modellierung analysiert werden, und auf diese Weise der Betrieb einer solchen Gasturbine hinsichtlich einer oder mehrerer Zielgrößen optimiert werden.

Gemäß einer Ausführungsform ist die Gastrubine dazu ausgelegt, mit einem Gasgemisch betrieben zu werden. Beispielsweise kann es sich bei dem Gasgemisch um ein Gemisch aus Erdgas und Wasserstoff handeln. Hierbei können die Modellierungsdaten beispielsweise jeweils Daten für einen Betrieb mit unterschiedlicher Zusammensetzung des Gasgemisches umfassen. Auf diese Weise kann auf Grundlage der jeweiligen Modellierung einerseits der Einfluss einer Variation der einzelnen Bestandteile in dem Gasgemisch untersucht werden. Darüber hinaus können auch für verschiedene Zusammensetzungen des Gasgemisches jeweils die Einstellungen für den Betrieb einer solchen Gasturbine optimiert werden

Gemäß einer Ausführungsform umfassen die Modellierungsdaten jeweils Daten für einen Betrieb mit einem unterschiedlichen Anteil von Wasserstoff in dem Gasgemisch. Hierdurch können Modellierung für eine Gasturbine erstellt werden, welche dazu geeignet sind, den Einfluss des Wasserstoffsanteils in der Brennstoff für die Gasturbine zu untersuchen und das System mit einer solchen Gasturbine für den jeweiligen Wasserstoffanteil zu optimieren. Hierdurch kann zum Beispiel im Rahmen einer vermehrten Nutzung von Wasserstoff als regenerativen Energieträger ein bestehendes System mit einer Gasturbine für einen Betrieb mit einem höheren Anteil von Wasserstoff in dem Brennstoffgemisches parametrisiert werden.

Gemäß einer Ausführungsform können die Modellierungsdaten jeweils Daten für eine unterschiedliche Konfiguration des industriellen Systems umfassen. So können beispielsweise bei der Modellierung für industrielle Systeme, insbesondere eine Gasturbine, unterschiedliche Konfigurationen berücksichtigt werden. Beispielsweise kann eine Gasturbine bei einem Betrieb mit einem höheren Anteil von Wasserstoff in dem Brennstoffgemisches mit einer Einstellung betrieben werden, bei welcher andere Sensoren genutzt werden, unterschiedliche Einstellungen von Ventilen angewendet werden, ggf. zum Teil andere Komponenten in der Gasturbine genutzt werden, etc. Entsprechende können unterschiedliche Konfigurationen bei der Modellierung mit berücksichtigt werden.

Durch die erfindungsgemäße Modellierung eines industriellen Systems auf Grundlage einer bestehenden Modellierung, welche mittels zusätzlicher Modellierungsdaten ergänzt oder modifiziert wird, ist es somit möglich, eine Modellierung für eine neue bzw. erweiterte Konfiguration des industriellen Systems zu generieren. Hierbei ist es möglich durch die Verwendung eines bereits bestehenden Modells, welches lediglich durch eine geringe Menge von zusätzlichen Modellierungsdaten modifiziert bzw. angepasst wird, die neue Modellierung mittels einer relativ geringen Menge an zusätzlichen Modellierungsdaten zu erzeugen. Durch das Bereitstellen einer zusätzlichen Information für die Unsicherheit der auf diese Weise erzeugten Modellierung kann die Zuverlässigkeit der neu gewonnenen Modellierung sowie die hieraus gewonnenen Informationen bewertet werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1: eine schematische Darstellung eines Prinzipschaubildes eines industriellen Systems mit einem hierzu korrespondierenden digitalen Zwilling;
- Figur 2: eine schematische Darstellung eines Prinzipschaubildes zur Generierung einer Modellierung gemäß einer Ausführungsform; und
- Figur 3: ein Ablaufdiagramm, wie es einem Verfahren gemäß einer Ausführungsform zugrunde liegt.

### Beschreibung von Ausführungsformen

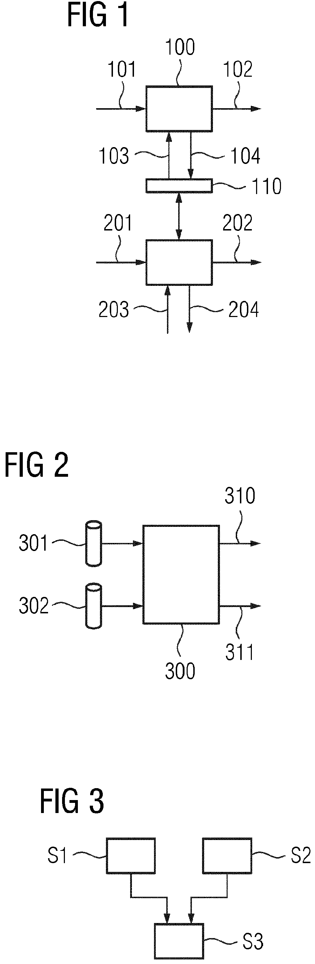

Figur 1 zeigt eine schematische Darstellung eines Prinzipschaubildes eines industriellen Systems 100 mit einer hierzu korrespondierenden Modellierung 200. Bei dem industriellen System 100 kann es sich grundsätzlich um ein beliebiges industrielles System handeln. Im Nachfolgenden wird das industrielle System 100 beispielhaft anhand eines Systems mit einer Gasturbine beschrieben. Es wird jedoch ausdrücklich darauf hingewiesen, dass das erfindungsgemäße Grundprinzip auch auf andere industrielle Systeme ebenso anwendbar ist.

Dem industriellen System 100 können eine oder mehrere Komponenten 101 als Eingangsgrößen zugeführt werden. Bei einer Gasturbine beispielsweise können es sich bei diesen eingangsseitig zugeführten Komponenten 101 um Sauerstoff und ein Brennmaterial handeln. Bei konventionellen Gasturbinen wird beispielsweise als Brennmaterial vorzugsweise Erdgas o. ä. eingesetzt. Im Rahmen der voranschreitenden Nutzung von erneuerbaren Energien kann in diesem eingangsseitig bereitgestellten Gas auch beispielsweise Wasserstoff, insbesondere sogenannter grüner Wasserstoff, beigemischt werden.

Ausgangsseitig können durch das industrielle System 100 eine oder mehrere Komponenten 102 abgegeben werden. Bei dem Beispiel einer Gasturbine umfassen diese Ausgangskomponenten 102 beispielsweise neben der umgesetzten Energie in Form von Elektrizität und/oder Wärme auch die Abgase der Gasturbine.

Das industrielle System 100 soll in der Regel derart betrieben werden, dass einerseits die eingangsseitig bereitgestellten Komponenten 101 möglichst effizient umgesetzt werden, und dabei auch die von dem industriellen System 100 abgegebenen Komponenten vorgegebenen Rahmenbedingungen entsprechen. Beispielsweise soll bei einer Gasturbine die abgegebene Energiemenge maximiert und die emittierte Schadstoffmenge minimiert werden.

Hierzu können dem industriellen System 100 eine oder mehrere Steuer- oder Regelgrößen 103 vorgegeben werden. Zusätzlich kann das industrielle System 100 beispielsweise mittels Sensoren oder ähnlichem überwacht werden und die dabei gewonnenen Daten 104 bereitgestellt werden. Die Steuerung bzw. Regelung kann beispielsweise mittels einer entsprechenden Steuereinrichtung 110 erfolgen.

Für die Steuerung bzw. Regelung des industriellen Systems 100 kann das Betriebsverhalten dieses Systems 100 beispielsweise mittels einer Modellierung 200, zum Beispiel in Form eines digitalen Zwillings bzw. digital twin nachgebildet werden. Auf diese Weise können Einstellungen in dem industriellen System 100 unter Verwendung der Modellierung 200 simuliert werden, und hierdurch eine möglichst optimale Einstellung des realen industriellen Systems 100 ermittelt werden.

Dieser Modellierung 200 können analog zu dem realen System 100 Eingangsgrößen 201 zugeführt werden, Steuer- bzw. Regelgrößen 203 vorgegeben werden, Konfigurationen bzw. Sensordaten 204 ausgelesen werden, und die resultierenden Ausgangsgrößen 202 ermittelt werden.

Die Modellierung 200 kann hierbei grundsätzlich auf beliebige eigene Weise erstellt werden. Beispielsweise kann eine solche Modellierung 200 mittels eines Verfahrens des maschinellen Lernens, insbesondere durch Trainieren eines neuronalen Netzwerkes gebildet werden. Für die Erstellung einer solchen Modellierung 200 sind in der Regel sehr viele Daten erforderlich, welche das jeweilige industrielle System 100 charakterisieren. Diese Daten können zum Beispiel während des Betriebs des realen industriellen Systems 100 oder eines zu dem industriellen System 100 korrespondierenden weiteren System ermittelt, abgespeichert und zur Erzeugung der Modellierung 200 verwendet werden.

Soll das industrielle System jedoch in einem Bereich betrieben werden, zu welchen bei der Erzeugung der Modellierung 200 keine Datenbasis zur Verfügung stand, so kann gegebenenfalls die Modellierung 200 für derartige Betriebsbedingungen keine oder zumindest keine verlässlichen Daten liefern. Entsprechend muss für solche Betriebsbedingungen die Modellierung 200 angepasst, d. h. ergänzt oder modifiziert werden. Eine vollständige neue Erstellung einer neuen Modellierung 200 würde jedoch auch eine entsprechende große Datenbasis für die neu zu betrachtenden Betriebsbedingungen des industriellen Systems erfordern. Für bisher noch nicht oder zumindest nur sehr selten eingestellte Betriebsbedingungen des industriellen Systems 100 liegen derartige Daten jedoch auch noch nicht oder in geringem Umfang vor.

Am Beispiel einer Gasturbine könnte beispielsweise eine bisher mit konventionellem Brennstoff, beispielsweise Erdgas betriebene Gasturbine für den Betrieb mit einer Beimischung von Wasserstoff in dem Brennstoff erweitert werden. Da derartige Systeme jedoch zuvor vorzugsweise mit konventionellem Brennstoff betrieben wurden, liegen in der Regel auch keine oder nur sehr wenige Daten für einen Betrieb mit einem entsprechend neu einzusetzenden Brennstoffgemisch vor. Somit können eine Modellierung 200, welche lediglich auf Grundlage von konventionellen Brennstoffen gebildet wurde, nicht oder nur sehr begrenzt für einen Betrieb mit Wasserstoffbeimischung, insbesondere einer Beimischung von höheren Anteilen von Wasserstoff, genutzt werden. Andererseits liegen für einen derartigen Betrieb in der Regel keine oder nur sehr wenige Daten vor.

Zur Bildung einer neuen Modellierung 200, welche auch Betriebsbedingungen abbilden kann, für die bisher nur eine sehr begrenzte Datenbasis vorliegt, ist es erfindungsgemäß vorgesehen, eine bereits existierende Modellierung 200 zu nutzen, und diese existierende Modellierung 200 durch geeignete Modifizierung oder Erweiterung unter Verwendung einer relativ kleinen weiteren Datenmenge anzupassen.

Für das Beispiel einer Gasturbine kann zum Beispiel eine Modellierung 200 auf Grundlage von konventionellen Brennstoffen als Grundlage genutzt werden, um diese Modellierung 200 unter Verwendung einer relativ geringen Datenmenge, die bei einem Betrieb eines Brennstoffes mit Wasserstoffbeimischung gewonnen wurde, anzupassen, insbesondere zu modifizieren oder zu erweitern. Diese Weise kann durch die Kombination der relativ großen Datenbasis für den konventionellen Betrieb mit der begrenzten Datenbasis für einen neuen bzw. erweiterten Betrieb, eine Modellierung 200 generiert werden, die auch bei relativ wenigen Daten für die neuen Betriebsbedingungen eine verlässliche Modellierung liefert.

Zur Erzeugung der neuen Modellierung 200 auf Grundlage einer bisherigen Modellierung sowie zusätzlichen Modellierungsdaten kann grundsätzlich jeder hierfür geeignete Ansatz werden. Beispielsweise können die neuen Modellierungsdaten mit den Modellierungsdaten kombiniert werden, welche zur Erstellung der bisherigen Modellierung verwendet worden sind. Gegebenenfalls kann hierbei einen Teil der Modellierungsdaten für die bisherige Modellierung entfernt oder durch neue Modellierungsdaten substituiert werden.

Alternativ auch möglich, eine bereits existierende Modellierung 200 durch einen weiteren Trainingsvorgang o. ä. mittels in der zusätzlichen Datenbasis zu modifizieren oder zu ergänzen.

Darüber hinaus kann, insbesondere wenn in dem industriellen System 100 neben der Eingangsgrößen 101 und der Steuer- bzw. Regelgrößen 103 auch weitere Modifikationen vorgenommen werden, zum Beispiel ein sogenannter "Progessive Neural Networks" Ansatz verfolgt werden, bei welchem iterativ einzelne Teilnetzwerke hinzugefügt werden und dabei die jeweiligen Modifikationen in dem System 100 trainiert bzw. gelernt werden. Es versteht sich jedoch, dass grundsätzlich auch beliebige andere Ansätze möglich sind, um eine bestehende Modellierung 200 unter Verwendung einer begrenzten zusätzlichen Datenbasis anzupassen.

Die Modifikation besteht der Modellierung 200 auf Grundlage von weiteren Daten ermöglicht es somit, auch mittels einer relativ geringen Datenbasis eine Modellierung 201 des industrielles Systems 100 zu generieren, welche auch einen erweiterten oder veränderten Betriebsbereich darstellen kann. Aufgrund der begrenzten Datenbasis für die Erweiterung bzw. Modifikation der Modellierung 200 können dabei die gewonnenen Ergebnisse aus einer solchen Modellierung 200 mit Unsicherheiten behaftet sein. Um diese gegebenenfalls erhöhten Unsicherheiten berücksichtigen zu können, wird bei der Erstellung einer ergänzten bzw. modifizierten Modellierung 200 auch eine Angabe über die die jeweiligen Unsicherheiten ermittelt, welche aus der neu gewonnenen Modellierung 200 resultieren. Auf diese Weise können die durch die neu gewonnene Modellierung 200 ermittelten Angaben unter Berücksichtigung der korrespondierenden Unsicherheiten bewertet werden.

Zur Ermittlung der jeweiligen Unsicherheiten der aus der Modellierung 200 stammenden Resultate kann grundsätzlich jeder beliebige geeignete Ansatz verwendet werden. Beispielsweise können bei der Modifikation bzw. Anpassung der neuen Modellierung unter Verwendung der zusätzlichen Datenbasis jeweils entsprechende Parameter für die Spezifikation der einzelnen Angaben mit in die Modellierung 200 einfließen. Auf diese Weise ergibt sich für die neu gebildete Modellierung 200 eine unsicherheitsintensive Modellierung, die neben der reinen Ausgangsgrößen auch jeweils eine entsprechende Angabe über die mit der Ausgangsgrößen verbundenen Unsicherheit liefert.

Die Angaben über die mit den Ausgangsgrößen verbundenen Unsicherheiten können einerseits dazu genutzt werden, um die Verlässlichkeit bzw. Genauigkeit der jeweiligen Ausgangsgröße zu bewerten. Darüber hinaus ist es auch möglich, die Angaben über die Unsicherheiten in der Ausgangsgrößen zu analysieren und hieraus beispielsweise Vorschläge oder Empfehlungen für eine Erweiterung der Datenbasis abzuleiten. So können zum Beispiel für die Modellierung einer Gasturbine aus den jeweiligen Unsicherheiten ein oder mehrere Betriebspunkte ermittelt werden, an welchen gegebenenfalls noch zusätzliche Daten ermittelt werden sollen, um die Unsicherheiten zu minimieren. Auf Grundlage derartiger Empfehlungen kann zum Beispiel ein reales System betrieben entsprechend werden, um weitere Modellierungsdaten zu gewinnen. Diese weiteren Modellierungsdaten können daraufhin erneut dazu genutzt werden, um die Modellierung 200 für das jeweilige System anzupassen und hierdurch zu optimieren, insbesondere die jeweiligen Unsicherheiten zu minimieren.

Somit können die in Zusammenhang mit der Modellierung ermittelten Unsicherheiten dazu genutzt werden, um Hinweise und Empfehlungen zur Generierung weiterer Modelldaten bereitzustellen. Hierzu können zum Beispiel die Unsicherheiten dahingehend analysiert werden, dass bestimmte Einstellungen oder Parametrisierungen des industriellen Systems 100 ermittelt werden, welche weitere Daten für eine Minimierung der Unsicherheiten in der Modellierung 200 liefern können. Diese Empfehlungen können daraufhin im Betrieb des jeweiligen industriellen Systems 100 eingestellt werden. Daraufhin können die resultierenden Eigenschaften des industriellen Systems 100, beispielsweise sensorisch erfasste Werte o. ä., ermittelt werden und diese als weitere Modelldaten zur Verbesserung, insbesondere Optimierung der Modellierung 200 genutzt werden.

Figur 2 zeigt eine schematische Darstellung eines Prinzipschaubildes einer Anordnung zur Modifizierung einer Modellierung 200 für ein industrielles System gemäß einer Ausführungsform. Als Datenbasis können hierzu Daten 301 einer bestehenden Modellierung bereitgestellt werden. Ferner können zusätzliche Modelldaten 302 bereitgestellt werden, auf deren Grundlage die bestehende Modellierung modifiziert werden soll. Die Daten 301 und 302 können daraufhin einer Verarbeitungseinrichtung 300 zugeführt werden, welche unter Verwendung der zusätzliche Modelldaten 302 die bestehende Modellierung ergänzt oder modifiziert. Hierzu können je nach Anwendungsfall verschiedene Ansätze angewendet werden. Wie oben bereits ausgeführt, können beispielsweise aus einer Kombination der Daten 301 für die bestehende Modellierung sowie der zusätzlichen Modelldaten 302 eine neue Modellierung generiert werden. Hierzu kann zum Beispiel aus den bereitgestellten Daten 301 und 302 eine vollständig neue Modellierung erstellt werden. Beispielsweise kann hierzu ein vollständig neuer Prozess des maschinellen Lernens für ein neues Modell ausgeführt werden. Alternativ kann auch eine bereits bestehende Modellierung unter Verwendung der zusätzlichen Modelldaten 302 eine bereits existierende Modellierung angepasst werden, in dem zum Beispiel ein weiterer Trainingsprozess auf die bereits bestehende Modellierung unter Verwendung der zusätzliche Modelldaten 3002 ausgeführt wird. Ferner aus sind auch weitere Ansatz wie beispielsweise der Ansatz eines progressiven neuronalen Netzwerkes (engl. "Progessive Neural Network") o. ä. möglich. Als Ergebnis kann die Verarbeitungseinrichtung 300 einerseits das neu erstellte, modifizierte oder ergänzte Modell 310 bereitstellen. Zusätzlich werden Angaben 311 über die Unsicherheiten dieses Modelles bereitgestellt.

Figur 3 zeigt ein Ablaufdiagramm, wie es einem Verfahren zur Modifizierung einer Modellierung 200 für ein industrielles System 100 gemäß einer Ausführungsform zugrunde liegen kann. Grundsätzlich kann ein solches Verfahren beliebige Verfahrensschritte umfassen, wie sie zuvor bereits in Zusammenhang mit Figur 1 und 2 beschrieben worden sind. Alternativ können auch sie zuvor geschrieben Ausführungsformen beliebige Verfahrensschritte und/oder Komponenten aufweisen, wie sie zur Implementierung des nachfolgend beschriebenen Verfahrens erforderlich sind.

In einem Schritt S1 wird eine bestehende Modellierung für ein industrielles System 100 bereitgestellt. Ferner werden in einem Schritt S2 weitere Modellierungsdaten bereitgestellt. In Schritt S3 wird daraufhin unter Verwendung der bereitgestellten Modellierung und der weiteren Modellierungsdaten eine ergänzte oder modifizierte Modellierung generiert. Ferner werden auch Angaben über Unsicherheiten dieser ergänzten oder modifizierten Modellierung unter Verwendung der Modellierungsdaten ermittelt und bereitgestellt.

Zusammenfassend betrifft die vorliegende Erfindung eine Erstellung einer Modellierung für ein industrielles System. Hierzu wird auf eine bereits bestehende Modellierung zurückgegriffen, welche unter Verwendung weiterer Modellierungsdaten ergänzt oder modifiziert wird. Zusätzlich werden auch Unsicherheiten der so gewonnenen ergänzten bzw. modifizierten Modellierung ermittelt. Durch die Nutzung einer bereits bestehenden Modellierung, kann eine neue, ergänzte bzw. modifizierte Modellierung mittels einer geringen Menge an zusätzlichen Modellierungsdaten erstellt werden. Somit wird ein eine unsicherheitssensitive Anpassung einer bestehenden Modellierung erzielt.

## Patentansprüche

1. Verfahren zur Modellierung eines industriellen Systems (100) ,
wobei eine bestehende Modellierung (301) unter Verwendung von Modellierungsdaten (302) ergänzt oder modifiziert wird, und
wobei eine Unsicherheit (311) für die ergänzte oder modifizierte Modellierung (310) unter Verwendung der Modellierungsdaten (302) ermittelt wird.

2. Verfahren nach Anspruch 1, wobei die Modellierung (310) einen digitalen Zwilling des industriellen Systems (100) umfasst.

3. Verfahren nach Anspruch 1 oder 2, wobei Modellierung (310) unter Verwendung eines Verfahrens des maschinellen Lernens ergänzt oder modifiziert wird.

4. Verfahren nach einem der Ansprüche 1 bis 3, wobei die bestehende Modellierung (301) unter Verwendung der Modellierungsdaten (302) erweitert wird.

5. Verfahren nach einem der Ansprüche 1 bis 3, wobei unter Verwendung der bestehenden Modellierung (301) und der Modellierungsdaten (302) eine neue Modellierung (310) des industriellen Systems (310) erstellt wird.

6. Verfahren nach einem der Ansprüche 1 bis 5, wobei die Modellierungsdaten (302) sensorisch erfasste Betriebsdaten des industriellen Systems (100) umfassen.

7. Verfahren nach einem der Ansprüche 1 bis 6, mit einem Schritt zum Analysieren der ermittelten Unsicherheit (311) und Ermitteln von mindestens einer Einstellung des industriellen Systems (100), bei welcher Betriebsdaten erfasst werden können, die dazu geeignet sind eine Modellierung des industriellen Systems (100) mit einer reduzierten Unsicherheit zu bestimmen.

8. Vorrichtung zur Steuerung und/oder Überwachung eines industriellen Systems (100), wobei die Steuerung und/oder Überwachung des industriellen Systems (100) unter Verwendung einer Modellierung (200) des industriellen Systems (100) erfolgt und
wobei die Vorrichtung eine Verarbeitungseinrichtung (300) umfasst, die dazu ausgelegt ist eine bestehende Modellierung (301) unter Verwendung von Modellierungsdaten (302) zu ergänzen oder zu modifizieren wird,
wobei die Verarbeitungseinrichtung (300) ferner dazu ausgelegt ist, eine Unsicherheit (311) für die ergänzte oder modifizierte Modellierung (310) unter Verwendung der Modellierungsdaten (302) zu ermitteln, und
wobei die Vorrichtung zur Steuerung und/oder Überwachung des industriellen Systems (100) dazu ausgelegt ist, das industrielle System (100) unter Verwendung der ergänzten oder modifizierten Modellierung (310) und der ermittelten Unsicherheit (310) zu Steuern und/oder zu überwachen.

9. Vorrichtung nach Anspruch 8, wobei das industrielle System (100) eine Gasturbine umfasst.

10. Vorrichtung nach Anspruch 9, wobei die Gastrubine dazu ausgelegt ist, mit einem Gasgemisch betrieben zu werden, und wobei die Modellierungsdaten (302) jeweils Daten für einen Betrieb mit unterschiedlicher Zusammensetzung des Gasgemisches umfassen.

11. Vorrichtung nach Anspruch 10, wobei die Modellierungsdaten (302) jeweils Daten für einen Betrieb mit einem unterschiedlichen Anteil von Wasserstoff in dem Gasgemisch umfassen.

12. Vorrichtung nach einem der Ansprüche 8 bei 11, wobei die Modellierungsdaten (302) jeweils Daten für eine unterschiedliche Konfiguration des industriellen Systems (100) umfassen.
